**Europäisches Patentamt**

**European Patent Office**

**Office européen des brevets**

(11) Veröffentlichungsnummer: **0 518 016 A1**

# EUROPÄISCHE PATENTANMELDUNG

(21) Anmeldenummer: **92105741.0**

(51) Int. Cl.5: **F26B 17/26**

(22) Anmeldetag: **03.04.92**

(30) Priorität: **14.06.91 DE 4119607**

(43) Veröffentlichungstag der Anmeldung:
**16.12.92 Patentblatt 92/51**

(84) Benannte Vertragsstaaten:
**BE DE FR IT**

(71) Anmelder: **Uhde GmbH**
**Friedrich-Uhde-Strasse 15 Postfach 262**
**W-4600 Dortmund 1(DE)**

(72) Erfinder: **Hederer, Hartmut, Dr.**
**Driverweg 12**
**W-4600 Dortmund 50(DE)**
Erfinder: **Kreft, Manfred**
**Hohes Stück 8**
**W-5802 Wetter 2(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**W-4600 Dortmund 1(DE)**

(54) **Verfahren und Vorrichtung zur Behandlung von Schüttgut.**

(57) Mit einem Verfahren und einer Vorrichtung zur Behandlung von Schüttgut soll eine Lösung geschaffen werden, mit der im kontinuierlichen Betrieb Schüttgut den unterschiedlichsten Behandlungsschritten unterworfen werden kann, ohne daß die Kontinuität der Förderung unterbrochen wird, wobei eine entsprechende Vorrichtung sehr kompakt mit gleich hoher Durchsatzleistung gestaltbar sein soll.

Dies wird verfahrensmäßig dadurch erreicht, daß alle Behandlungsschritte an einem kontinuierlichen Schüttgutstrom in Teilzonen vorgenommen werden, wobei der Schüttgutstrom durch eine Drehschwingförderung als horizontale, flächige Wanderschicht ausgebildet wird, wobei sich die Vorrichtung dadurch auszeichnet, daß in Förderrichtung (15) des Schüttgutes (18) gesehen jede Schwingplatte (4) in den notwendigen Behandlungsschritten angepaßte Teilzonen (11) aufgeteilt ist.

FIG.1

Die Erfindung richtet sich auf ein Verfahren zur Behandlung von Schüttgut, wie beispielsweise von körnigem Katalysatormaterial, Aktivkohlegranulat od. dgl., mit aufeinanderfolgenden chemischen und/oder physikalischen Behandlungsschritten in einzelnen Prozeßzonen sowie auf eine Vorrichtung zur Behandlung von Schüttgut.

Aus der DE-OS 36 40 610 der Anmelderin ist ein Verfahren und eine Vorrichtung zum Konditionieren von wasserhaltigem Schüttgutmaterial bekannt, wobei dort auf Schwingplatten eines Drehschwingförderers Schüttgutmaterial, wie Braunkohle, Steinkohle, Torf od. dgl., getrocknet wird, und zwar in der Weise, daß die Schwingplatten von außen mittels Dampf erwärmt werden. Auf den erwärmten Schwingplatten wird das zu trocknende Gut gefördert und durch Abwurfschächte auf die jeweils darunter liegende Schwingplatte abgeworfen, am Ende des Schwingplattenförderers wird dann über eine Austragschleuse das getrocknete Gut ausgetragen.

Es gibt eine Vielzahl von physikalisch/chemischen Behandlungen von Schüttgut, die sich nicht auf die Trocknung eines solchen Granulates beschränken. Eine solche Behandlung kann beispielsweise in einer Extraktion bestehen, in einer Adsorption, Absorption, in einer Lösung oder Wäsche od. dgl. Das Schüttgut kann auch physikalischen Behandlungsstufen unterworfen werden, etwa dem Erwärmen, dem Abkühlen, dem Sieben, dem Auflockern über Fallstrecken u. dgl. mehr.

Ein Problem bei der Behandlung von Schüttgut, welches als körniger oder stückiger Feststoff vorliegen kann, besteht darin, daß während der Behandlung ein kontinuierlicher Strom in einer Prozeßzone aufrechterhalten werden muß. Problematisch ist dies insbesondere dann, wenn es sich um Schüttgut handelt, welches aufgrund seiner Beschaffenheit zum Absetzen, zum Zusammen- oder Anbacken neigt oder aber unangenehme Abriebeigenschaften aufweist. Bei bekannten Verfahren müssen die jeweiligen Verfahrensstufen diesem Verhalten des Schüttgutes meist sehr aufwendig angepaßt werden.

Bisher werden solche Behandlungsschritte in einzelnen Prozeßanlagen durchgeführt. Nach Beendigung einer Behandlung wird dann das Schüttgut über Fördermittel in einen weiteren Behandlungsapparat gefördert, um dort erneut bearbeitet zu werden.

Aufgabe der Erfindung ist die Schaffung einer Lösung, mit der im kontinuierlichen Betrieb Schüttgut den unterschiedlichsten Behandlungsschritten unterworfen werden kann, ohne daß die Kontinuität der Förderung unterbrochen wird, wobei eine entsprechende Vorrichtung sehr kompakt mit gleich hoher Durchsatzleistung gestaltbar sein soll.

Mit einem Verfahren der eingangs bezeichneten Art wird diese Aufgabe gemäß der Erfindung dadurch gelöst, daß alle Behandlungsschritte an einem kontinuierlichen Schüttgutstrom in Teilzonen vorgenommen werden, wobei der Schüttgutstrom durch eine Drehschwingförderung als horizontale, flächige Wanderschicht ausgebildet wird.

Mit der Erfindung wird erreicht, daß die einzelnen Prozeß- bzw. Behandlungszonen und die reine Förderung zwischen den Zonen jeweils ungepuffert, kontinuierlich durchschritten werden.

Dadurch, daß die Förderung mittels einer Drehschwingförderung erfolgt, läßt sich eine Kontinuität im Schüttgutstrom erhalten. Die horizontale flächige Wandschicht des Schüttgutes ermöglicht dabei mit besonders günstigen Mitteln einen Zugriff in unterschiedliche Behandlungszonen, unabhängig, ob die Behandlung physikalisch oder chemisch erfolgt.

In Ausgestaltung sieht die Erfindung vor, daß der Schüttgutstrom in wenigstens einer Teilzone mit einem flüssigen oder gasförmigen Medium in Kontakt gebracht wird, einer Aufheizung und/oder einer Trocknung und/oder einer Kühlung, einer Niveau-Erhöhung und/oder einer Niveau-Absenkung unterworfen wird. Mit flüssigen oder gasförmigen Medien lassen sich Waschvorgänge durchführen, Extraktionen, Absorptionen oder Adsorptionen, mit Heißdampf läßt sich erwärmen, mit Kühlluft läßt sich kühlen, um nur einige der Möglichkeiten hier anzusprechen.

Die Flüssigkeitsbehandlung kann im Gegenstrom ebenso bewirkt werden wie im Querstrom. Mit Querstrom ist sowohl der Querstrom in der Horizontalebene als auch in der Vertikalebene gemeint, d.h. der Schüttgutstrom kann auch beregnet werden, wobei die Flüssigkeit dann unten durch Siebplatten od. dgl. wieder abgegeben wird.

Auch die Behandlung mit gas- oder dampfförmigen Fluiden kann in Schwerkraftrichtung von unten nach oben oder von oben nach unten erfolgen, wobei auch hier eine Querstrombeaufschlagung vorgesehen sein kann. Bei der Beaufschlagung mittels gasförmiger Fluide kann diese auch in einzelnen Prozeß-Teilzonen nacheinander erfolgen, d.h. zunächst wird mit dem gasförmigen Fluid eine Teilzone beaufschlagt, darauf eine folgende und dann z.B. eine Dritte, wobei sich beispielsweise ein warmes Medium in den einzelnen Schritten abkühlt, oder aber es können mit einem Gasstrom unterschiedliche Teilzonen gleichzeitig beaufschlagt werden.

Die Aufgabe der Erfindung wird mit einer Vorrichtung zur Behandlung von Schüttgut, die als Schwingplatten-Apparat ausgebildet ist, dadurch gelöst, daß in Förderrichtung des Schüttgutes gesehen jede Schwingplatte in den notwendigen Behandlungsschritten angepaßte Teilzonen aufgeteilt ist.

Mit der Erfindung wird erreicht, daß die einzelnen Prozeß- bzw. Behandlungszonen und die reine Förderung zwischen den Zonen jeweils ungepuffert, kontinuierlich durchschritten werden.

Dadurch, daß die Förderung mittels einer Drehschwingförderung erfolgt, läßt sich eine Kontinuität im Schüttgutstrom erhalten. Die horizontale flächige Wandschicht des Schüttgutes ermöglicht dabei mit besonders günstigen Mitteln einen Zugriff in unterschiedliche Behandlungszonen, unabhängig, ob die Behandlung physikalisch oder chemisch erfolgt.

In Ausgestaltung ist nach der Erfindung vorgesehen, daß wenigstens eine Teilzone auf einer Schwingplatte als Flüssigkeitsbecken ausgebildet ist. Mit einem solchen Flüssigkeitsbecken lassen sich alle Behandlungsschritte durchführen, bei denen ein flüssiges Fluid eingesetzt wird, etwa Waschprozesse, auch Absorptions- oder Adsorptionsprozesse u. dgl. mehr.

Vorteilhaft ist am Ende einer Flüssigkeitsteilzone eine Austragungsrampe für das Schüttgut in eine gegenüber dem Flüssigkeitsspiegel höhere Teilzone erfindungsgemäß vorgesehen.

Damit läßt sich das zu behandelnde Schüttgut aus der Flüssigkeit anheben, ggf. über eine Abtropf- und Trockenzone führen, um dann weiteren Behandlungsschritten unterworfen werden zu können.

Zweckmäßig kann es sein, wenn wenigstens eine Teilzone mit einen flüssigen oder gasförmigen Fluidstrom durchlassenden Bodenbereich ausgebildet ist. Damit kann man einen Schüttgutstrom von oben mit Flüssigkeit beregnen, die dann nach unten wieder austritt, mit einem gasförmigen Medium von oben oder von unten beaufschlagen u. dgl. mehr.

Zum Einbringen insbesondere eines gasförmigen Fluids in das Schüttgut kann vorgesehen sein, daß der Bodenbereich mit Düsenöffnungen zum Einspeisen eines Fluids in das Schüttgut ausgerüstet ist.

Nach der Erfindung ist auch vorgesehen, daß der Abwurfschacht aus einer Schwingplatte bis unter den Flüssigkeitsspiegel der darunter liegenden Schwingplatte mit Flüssigkeitsbecken geführt ist. Dies ermöglicht eine staubfreie Förderung des abgeworfenen Schüttgutes in die darunter liegende Teilzone.

Zweckmäßig ist das Flüssigkeitsbecken auf einer Schwingplatte mit einem Überströmwehr für die Flüssigkeit oder einem Überströmkanal ausgerüstet.

Um eine besonders kompakte Bauweise zu erreichen, kann vorgesehen sein, die zentrale Schwingwelle der Vorrichtung als Hohlwelle zur wenigstens teilweisen Führung von gasförmigem Fluid auszubilden.

Teilzonen von Schwingplatten können mit einer z.B. aus der weiter oben genannten DE-OS 36 40 610 bekannten indirekten Heizung ausgerüstet sein, jeder Schwingplattenraum mit einer eigenen Flüssigkeits- und/oder Gaszuführung ausgerüstet sein, mehrere Schwingplattenräume können zur gleichzeitigen Beaufschlagung mit einer gemeinsamen Gas- und/oder Flüssigkeitszuführung ausgerüstet sein u. dgl. mehr.

Vorteilhaft kann es sein, mehrere Schwingplattenräume über Bypass- bzw. Überbrückungsleitungen miteinander zu verbinden, wie dies die Erfindung ebenfalls vorsieht.

Je nach Prozeßführung und dabei auftretender Staubentwicklung kann in weiterer Ausgestaltung auch vorgesehen sein, daß in der zentralen Schwingwelle zur Entstaubung des behandelnden gasförmigen Fluids ein Abscheidezyklon vorgesehen ist.

Die Erfindung ist nachstehend anhand der Zeichnung beispielsweise näher erläutert. Diese zeigt in

Fig. 1

eine Seitenansicht einer Anlage nach der Erfindung in vereinfachter Darstellung,

Fig. 2

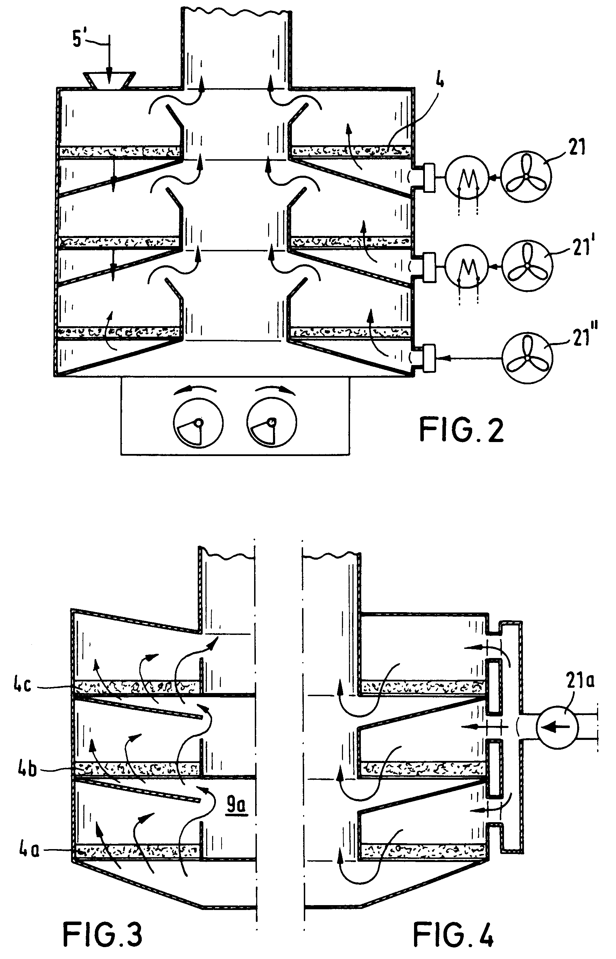

einen Schnitt durch ein mögliches Ausführungsbeispiel der Vorrichtung in schematischer Darstellung,

Fig. 3 und Fig. 4

abgewandelte Ausführungen in der Darstellungsweise gemäß Fig. 2,

Fig. 5

die Aufsicht auf eine Schwingplatte mit Teilzonen sowie in

Fig. 6

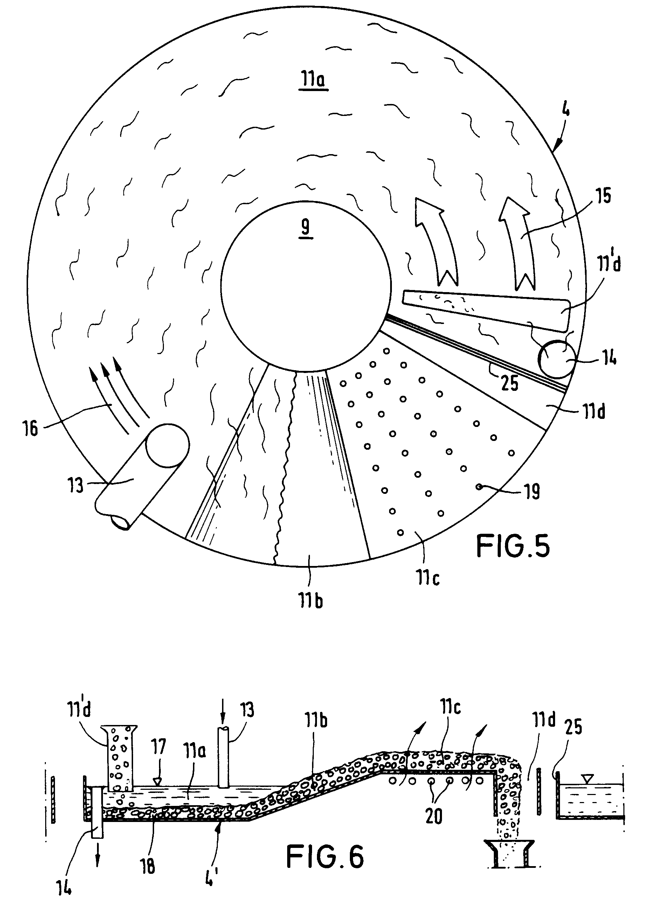

eine vereinfachte Darstellung einer Abwicklung des Weges auf einer Schwingplatte etwa gemäß Fig. 5.

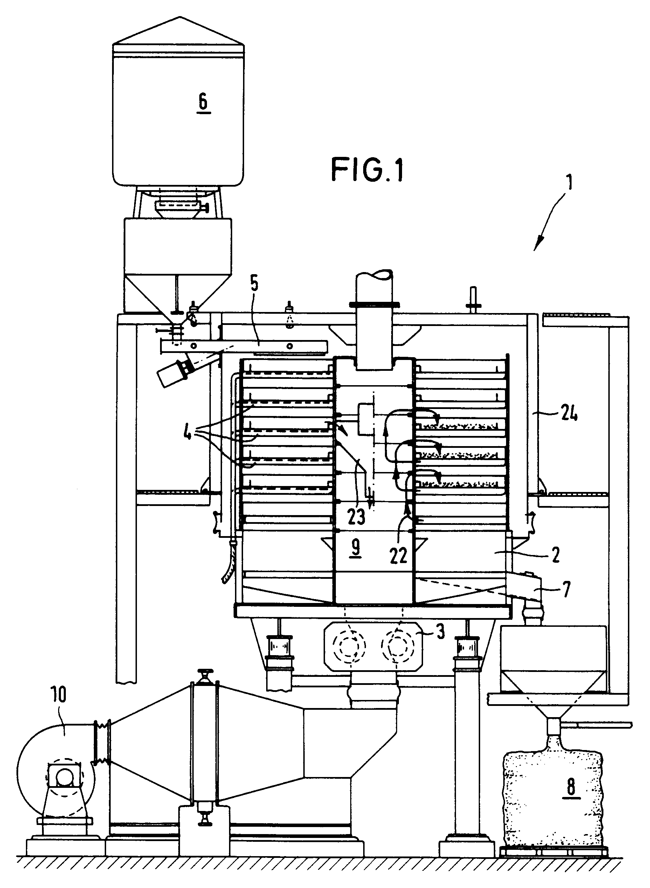

Die in Fig. 1 allgemein mit 1 bezeichnete Vorrichtung wird im wesentlichen von einem zentrischen Schwingplatten-Apparat 2 mit Exzenter-Schwingantrieb 3 gebildet mit einer Mehrzahl von Schwingplatten 4, die von oben über eine Fördereinrichtung 5 mit einem aus einem Reservoir 6 stammenden Schüttgut beaufschlagbar sind.

Das Schüttgut wird nach Durchlaufen der Schwingplatten und der damit erfolgenden Behandlung über eine Abzugseinrichtung 7 entnommen und in Säcke 8 gefüllt.

Die Schwingplatten 4 sind an einer zentralen Schwingwelle 9 angeordnet, die als Hohlwelle ausgebildet ist und beispielsweise mittels eines Gebläses 10 von einem Gas durchströmbar ist.

Wie sich insbesondere aus Fig. 5 ergibt, ist jede Schwingplatte 4 in mehrere Teilzonen 11, 11a, 11b etc. eingeteilt, und zwar im Beispiel der Fig. 5 in eine vergleichsweise große Teilzone 11a, die als Flüssigkeitsbecken ausgebildet ist, eine als Rampe ausgebildete Teilzone 11b, eine als Trockenzone ausgebildete Teilzone 11c und eine als Abwurfschacht ausgebildete Teilzone 11d, wobei der von oben kommende, die Schwingplatte 4 gemäß Fig. 5 beaufschlagende Abwurfschacht mit 11d' bezeichnet ist, die gleichen Bezugzeichen befinden sich auch in Fig. 6, die die Abwicklung in vereinfachter Darstellung wiedergibt. Hier wird beispielsweise die Flüssigkeit über ein Zuführrohr 13 aufgebracht. Ein Überlaufrohr 14 führt beispielsweise die Waschflüssigkeit im Becken 11a ab. Wie sich aus den Bewegungspfeilen 15 für das Schüttgut bzw. 16 für die Flüssigkeit ergibt, wird das Schüttgut im Gegenstrom zur Flüssigkeit gefördert.

Der Flüssigkeitsspiegel im Becken 11a ist in Fig. 6 mit 17 bezeichnet, der Abwurfschacht 11d taucht beispielsweise unter dem Flüssigkeitsspiegel 17, um einen staubfreien Einwurf des mit 18 andeutungsweise wiedergegebenen Schüttgutes zu ermöglichen.

In Fig. 5 ist dargestellt, daß z.B. die Teilzone 11c mit Durchströmöffnungen 19 für ein gasförmiges Fluid oder Abtropföffnungen für die Waschflüssigkeit ausgerüstet ist, in Fig. 6 ist eine Art Bodenheizung 20 angedeutet.

In Fig. 2 bis 4 sind unterschiedliche Beaufschlagungen einzelner Schwingplatten 4 wiedergegeben. So zeigt die Fig. 2 eine Möglichkeit, beispielsweise zunächst über ein Gebläse 21 Trockenluft einzublasen, welche die Schwingplatte von unten nach oben durchsetzt, dann im mittleren Bereich ggf. wieder Trocknungsluft und nachfolgend im unteren Bereich Kühlluft jeweils über die Gebläse 21' bzw. 21''. Der Eintrag des Schüttgutes ist in Fig. 2 mit 5' bezeichnet.

In Fig. 3 ist eine insgesamt Gegenstromführung eines Fluids gezeigt. Hier tritt das Fluid von unten in den Apparat ein, durchströmt die untere Schwingplatte 4a, wird über eine Überbrückungsleitung, gebildet vom Zentralrohr 9a, der nächsten Schwingplatte 4b zugeführt und nachfolgend nach oben der weiteren Schwingplatte 4c.

In Fig. 4 wird über ein gemeinsames Gebläse 21a eine Mehrzahl von Schwingplatten gleichzeitig beaufschlagt, wobei hier das Schüttgut von oben nach unten vom beaufschlagenden Fluid durchsetzt wird.

Schließlich zeigt Fig. 1, rechte Figurenhälfte, noch die Möglichkeit, überspringende Bypass-Leitungen 22 vorzusehen, während im Zentralrohr 9 in der linken Figurenhälfte der Fig. 1 ein mit 23 bezeichneter Entstaubungszyklon angedeutet ist.

Natürlich sind die beschriebenen Ausführungsbeispiele der Erfindung noch in vielfacher Hinsicht abzuändern, ohne den Grundgedanken zu verlassen. So kann, wie in Fig. 1 angedeutet, eine gasdichte Kapselung 24 um den Schwingplatten-Apparat vorgesehen sein mit der entsprechenden Eintrags- und Austragsschleuse, statt der angegebenen Anzahl an Schwingplatten kann eine Mehrzahl von weiteren Schwingplatten vorgesehen sein, einzelne Schwingplatten-Räume können gegenüber anderen gasdicht oder flüssigkeitsdicht gekapselt sein u. dgl. mehr.

## Patentansprüche

1. Verfahren zur Behandlung von Schüttgut, wie beispielsweise von körnigem Katalysatormaterial, Aktivkohlegranulat od. dgl., mit aufeinanderfolgenden chemischen und/oder physikalischen Behandlungsschritten in einzelnen Prozeßzonen,
dadurch gekennzeichnet,
daß alle Behandlungsschritte an einem kontinuierlichen Schüttgutstrom in Teilzonen vorgenommen werden, wobei der Schüttgutstrom durch eine Drehschwingförderung als horizontale, flächige Wanderschicht ausgebildet wird.

2. Verfahren nach Anspruch 1,
dadurch gekennzeichnet,
daß der Schüttgutstrom in wenigstens einer Teilzone mit einem flüssigen oder gasförmigen Medium in Kontakt gebracht wird.

3. Verfahren nach Anspruch 1 oder 2,
dadurch gekennzeichnet,
daß der Schüttgutstrom in Teilzonen einer Aufheizung und/oder einer Trocknung und/oder einer Kühlung unterworfen wird.

4. Verfahren nach einem der vorangehenden Ansprüche,
dadurch gekennzeichnet,
daß der Schüttgutstrom in Teilzonen einer Niveau-Erhöhung gegenüber der jeweils vorangegangenen Teilzonenhöhe bzw. einer Niveau-Erniedrigung unterworfen wird.

5. Verfahren nach einem der vorangehenden Ansprüche,
dadurch gekennzeichnet,
daß nach der Flüssigkeitsbehandlung des Schüttgutes der Flüssigkeitsstrom im Gegenstrom oder Querstrom zum Schüttgutstrom geführt wird.

6. Verfahren nach einem der vorangehenden Ansprüche, bei dem das Schüttgut einer Gas- oder Dampfbeaufschlagung unterzogen wird,
dadurch gekennzeichnet,
daß das gasförmige Fluid den Schüttgutstrom in Schwerkraftrichtung von unten nach oben oder von oben nach unten durchströmt.

7. Verfahren nach einem der vorangehenden Ansprüche,
dadurch gekennzeichnet,
daß das gasförmige Fluid einzelne Teilzonen nacheinander im Gleichstrom oder Gegenstrom in hinteinanderfolgenden oder wenigstens teilweise parallelen Beaufschlagungen durchströmt.

8. Vorrichtung zur Behandlung von Schüttgut, wie beispielsweise von körnigem Katalysatormaterial, Aktivkohlegranulat od. dgl., mit einer Vielzahl von in Schwerkraftrichtung übereinanderliegenden Schwingplatten an einer gemeinsamen zentralen Schwingwelle in einem gemeinsamen, ggf. gegen die Umgebung gas- und staubdicht gekapselten Gehäuse mit einer Eintragschleuse für zu behandelndes Schüttgut und einer Austragschleuse für behandeltes Schüttgut, wobei eine Einrichtung zur Beaufschlagung der oberen Schwingplatte mit Schüttgut und an den Schwingplatten Abwurfschächte zum Abwurf des Schüttgutes vorgesehen sind,
dadurch gekennzeichnet,
daß in Förderrichtung (15) des Schüttgutes (18) gesehen jede Schwingplatte (4) in den notwendigen Behandlungsschritten angepaßte Teilzonen (11) aufgeteilt ist.

9. Vorrichtung nach Anspruch 8,
dadurch gekennzeichnet,
daß wenigstens eine Teilzone (11a) auf einer Schwingplatte (4) als Flüssigkeitsbecken ausgebildet ist.

10. Vorrichtung nach Anspruch 9,
dadurch gekennzeichnet,
daß am Ende einer Flüssigkeitsteilzone (11a) eine Austragungsrampe (11b) für das Schüttgut (18) in eine gegenüber dem Flüssigkeitsspiegel (17) höhere Teilzone vorgesehen ist.

11. Vorrichtung nach Anspruch 8 oder einem der folgenden,
dadurch gekennzeichnet,
daß wenigstens eine Teilzone (11c) mit einem einen flüssigen oder gasförmigen Fluidstrom durchlassenden Bodenbereich ausgebildet ist.

12. Vorrichtung nach Anspruch 8 oder einem der folgenden,
dadurch gekennzeichnet,
daß der Bodenbereich mit Düsenöffnungen (19) zum Einspeisen eines Fluids in das Schüttgut ausgerüstet ist.

13. Vorrichtung nach Anspruch 8 oder einem der folgenden,
dadurch gekennzeichnet,
daß der Abwurfschacht (11d') aus einer Schwingplatte bis unter den Flüssigkeitsspiegel (17) der darunter liegenden Schwingplatte (4') mit Flüssigkeitsbecken geführt ist (Fig. 6).

14. Vorrichtung nach Anspruch 8 oder einem der folgenden,
dadurch gekennzeichnet,
daß das Flüssigkeitsbecken (11a) auf einer Schwingplatte (4) mit einem Überströmwehr (25) für die Flüssigkeit oder einem Überströmkanal (14) ausgerüstet ist.

15. Vorrichtung nach Anspruch 8 oder einem der folgenden,
dadurch gekennzeichnet,
daß die zentrale Schwingwelle (9) als Hohlwelle zur wenigstens teilweisen Führung von gasförmigem Fluid ausgebildet ist.

16. Vorrichtung nach Anspruch 8 oder einem der folgenden,
dadurch gekennzeichnet,
daß wenigstens eine Teilzone (11c) mit einer an sich bekannten indirekten Heizung (20) ausgerüstet ist.

17. Vorrichtung nach Anspruch 8 oder einem der folgenden,
dadurch gekennzeichnet,
daß jeder Schwingplattenraum mit einer eigenen Flüssigkeits- und/oder Gaszuführung (21) ausgerüstet ist.

18. Vorrichtung nach Anspruch 8 oder einem der folgenden,
dadurch gekennzeichnet,
daß mehrere Schwingplattenräume zur gleichzeitigen Beaufschlagung mit einer gemeinsamen Gas- und/oder Flüssigkeitszuführung (21a) ausgerüstet sind.

19. Vorrichtung nach Anspruch 8 oder einem der folgenden,
dadurch gekennzeichnet,
daß mehrere Schwingplattenräume über benachbarte Schwingplattenräume überbrückende Bypass- bzw. Überbrückungsleitungen (22) miteinander verbunden sind.

20. Vorrichtung nach Anspruch 8 oder einem der folgenden,
dadurch gekennzeichnet,
daß in der zentralen Schwingwelle (9) zur Entstaubung des behandelnden gasförmigen Fluids ein Abscheidezyklon (23) vorgesehen ist.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 640 610 (UHDE GMBH)<br><br>* das ganze Dokument *<br>--- | 8,11,12, 15,16,18 | F26B17/26 |
| X<br>Y<br><br>A | DE-A-3 931 027 (CEW INDUSTRIEBERATUNG)<br><br><br>* das ganze Dokument *<br>--- | 1-7<br>8,11,12, 15,16,18<br>9,10 | |
| X<br><br>A | DE-A-2 054 629 (CARL SCHENCK MASCHINENFABRIK GMBH)<br>* das ganze Dokument *<br>--- | 1-4,6<br><br>9,10 | |
| X | CH-A-473 369 (SOGREAH)<br>* das ganze Dokument *<br>--- | 1 | |
| A | GB-A-1 556 180 (MONO-CONSTRUCTION LIMITED)<br>--- | | |
| A | US-A-3 058 235 (MORRIS ET AL)<br>--- | | |
| A | DE-U-8 808 579 (UHDE GMBH)<br><br>----- | | RECHERCHIERTE SACHGEBIETE (Int. Cl.5)<br><br>F26B |

Der vorliegende Recherchenbericht wurde für alle Patentansprüche erstellt

| Recherchenort | Abschlußdatum der Recherche | Prüfer |
|---|---|---|
| DEN HAAG | 10 SEPTEMBER 1992 | SILVIS H. |